# EUROPÄISCHE PATENTSCHRIFT

(11) **EP 4 068 596 B1**
(45) Veröffentlichungstag und Bekanntmachung des Hinweises auf die Patenterteilung: **11.02.2026**
(21) Anmeldenummer: 21166531.0
(22) Anmeldetag: 01.04.2021
(51) Int. Cl.: H02K 3/487, H02K 3/24, H02K 15/13, H02K 15/122

(54) **VERFAHREN ZUR HERSTELLUNG EINES STATORS EINER DYNAMOELEKTRISCHEN MASCHINE**
METHOD FOR MANUFACTURING A STATOR OF AN ELECTRIC MACHINE
PROCÉDÉ DE FABRICATION D'UN STATOR D'UNE MACHINE DYNAMOÉLECTRIQUE

(43) Veröffentlichungstag der Anmeldung: 05.10.2022
(73) Patentinhaber: Innomotics GmbH, 90441 Nürnberg (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Warmuth, Matthias, 97618 Windshausen (DE)
(74) Vertreter: Michalski Hüttermann & Partner Patentanwälte mbB

(56) Entgegenhaltungen:
- JP-A- S5 734 746
- JP-A- S57 148 547
- JP-A- S61 247 256
- US-A- 3 968 556
- US-A1- 2005 280 321

## Beschreibung

Die Erfindung betrifft ein Verfahren zur Imprägnierung eines Stators einer dynamoelektrischen Maschine, eine Vorrichtung zur Durchführung des Verfahrens, einen Stator einer dynamoelektrischen Maschine und eine dynamoelektrische Maschine.

Dynamoelektrische Maschinen weisen in Nuten eines Stators ein Wicklungssystem auf, das bei Bestromung ein Magnetfeld erzeugt und aufgrund elektromagnetischer Wechselwirkung mit einem Rotor eine rotatorische Bewegung einer, mit dem Rotor drehfest verbundenen Welle herbeiführt.

Das Wicklungssystem, **d.h.** Motorwicklung ist in den Nuten des Stators jeweils durch eine Nutisolation, insbesondere einen Nutkasten zum Blechpaket eines Stators hin isoliert und einem Deckschieber Richtung Nutschlitz bzw. Luftspalt der dynamoelektrischen Maschine abgedeckt. Durch die Nutisolation sind vor allem die Nutseitenwände als auch der Nutgrund abgedeckt.

Der Füllgrad einer Nut mit **z.B.** Kupferdrähten, im Verhältnis zur Gesamt-Nutquerschnitt in einem Statorblechpaket liegt im Bereich von ca. 80%.

Durch die mechanische Eigenspannung im Wickeldraht sowie Unregelmäßigkeiten in der Drahtverlegung in der Nut wird generell der am Schluss eingebrachte Deckschieber radial vom Nutgrund weggeschoben, so dass sich zwischen den Wickeldrähten leere Zwischenräume bilden. Diese unerwünschten Freiräume bzw. Hohlräume treten zwischen Nutseitenwand und Nutkastenisolation, zwischen Nutkastenisolation und Wickeldraht, zwischen einzelnen Wickeldrähten und zwischen Wickeldraht und Deckschieber auf.

Diese Hohlräume reduzieren den Füllgrad der Nut, was die Leistungsfähigkeit einer dynamoelektrischen Maschine reduziert.

Des Weiteren werden durch diese Hohlräume bzw. Lufteinschlüsse des Wicklungssystems im Bereich der Nut die Durchschlagsfestigkeit der Wicklung in dem Nutbereich beim Betrieb der dynamoelektrischen Maschine reduziert.

Demnach treten Windungsschlüsse des Wicklungssystem als Ausfallursache eines Wicklungssystems überwiegend im Nutbereich auf.

Zudem behindern vor allem außenliegen Hohlräume, also Hohlräume im Bereich der Nutseitenwände die Wärmeabfuhr vom Wicklungsdraht bzw. vom Wicklungssystem zum Statorblech.

Um Hohlräume in den Wicklungssystemen im Bereich der Statornuten einer dynamoelektrischen Maschine sicher zu vermeiden, werden technisch und zeitlich aufwändige Imprägnierverfahren, wie **z.B.** das Vakuumvergießen eingesetzt.

Neben den Vakuumvergießen gibt es **u.a.** das Tauchimprägnierverfahren. Bei der Tauchimprägnierung eines Wicklungssystems einer dynamoelektrischen Maschine, sind Lufteinschlüsse kaum zu vermeiden. Es wird dabei versucht, die Hohlräume möglichst mit Imprägnierharz zu befüllen. Dies gelingt nur bedingt und ist mit höherem Harzverbrauch verbunden. Die höhere Harzaufnahme ist außerdem nur mit höheren Temperaturen und längeren Prozesszeiten bzw. "schnelleren" Imprägnierharzen zu realisieren. Dabei bilden sich jedoch ungewollte Harzschichten auf dem Blechpaket-Außendurchmesser, in der Statorbohrung sowie Tropfnasen am Wickelkopf. Dieses überschüssige Harz muss danach aufwändig beseitigt werden.

Das Wicklungssystem in den Nuten und/oder den Wickelköpfen wird mit Isolierharz gefüllt bzw. versehen und anschließend ausgehärtet. Diese Tränkung dient dem Füllen von Hohlräumen im Dielektrikum und in den Strömungswegen der Wärme. Damit werden Glimmentladungen vermieden und der Wärmewiderstand reduziert. Außerdem dient die Tränkung der mechanischen Verfestigung.

In der Herstellung eines Niederspannungs-Elektromotors (Industriemotoren oder E-Mobility-Motoren bis 1 kV) ist die Imprägnierung mit flüssigem Reaktivharz und die anschließende Härtung desgleichen ein sehr zeit- und kostenaufwendiger Prozess im Vergleich zu den übrigen Fertigungsschritten, wie Wickeln, Einziehen, Phasentrennen. Es handelt sich oftmals um große Tauchimprägnierstationen. Der Imprägnierprozess an sich ist ein integraler Prozess, wobei viele Achshöhen und Größen ein Tauch- und/oder Temperaturprofil durchlaufen. Dadurch ist es nahezu unmöglich, eine individuelle Optimierung der Imprägnierparameter auf eine Motorart zu erhalten.

Bekannt ist außerdem das sogenannte Träufelverfahren, als eine Imprägniermethode für sehr definierte Imprägnierprozesse. Dabei wird durch hochgenaue Dosieranlagen das Flüssigharz auf den rollierenden Stator aufgebracht. Eine Vorwärmung des Stators erzeugt eine Viskositätsverringerung des Harzes, womit der einsetzende Kapillareffekt begünstigt wird und sich die Statornut sukzessive mit Harz füllt.

Bei der Applikation des Harzes auf den rollierenden Stator gibt es mehrere Parameter, welche beachtet werden müssen, um einen optimalen und vor allem ausreichenden Harzfluss in die Nuten zu gewährleisten. Es ist also darauf zu achten, dass das Imprägniermedium auch bei axial längeren Blechpaketen bis in den Bereich des axialen Nutmittelpunktes fließt und erst dort geliert.

Dies ist insbesondere bei der Nutzung von zwei-komponentigen Flüssigharzen im Fokus, welche eine relativ schnelle Gelierzeit besitzen, da hierdurch selbst bei niedrigen Temperaturen innerhalb von kurzer Zeit ein Viskositätsgrenzwert überschritten wird und somit die Fließfähigkeit der Substanz deutlich verringert ist. Dieser Effekt ist andererseits erwünscht, um kurzfristig einen tropffreien Stator zu erhalten, stellt somit jedoch an die Fließfähigkeit des Harzes und die Aufnahmefähigkeit des Stators besonders hohe Anforderungen.

Aufgrund der hohen Varianz der Niederspannungsmotoren (verschiedene Achshöhen, Achslängen, Wicklungsarten, Drahtdurchmesser ...) trifft der Träufelstrahl einer Träufelanlage auf unterschiedlichste Substrate, Gegebenheiten innerhalb der Nut welche alle diese Mindestanforderungen der Aufnahmefähigkeit gewährleisten müssen, um letztendlich eine ausreichende Betriebssicherheit der dynamoelektrischen Maschinen zu gewährleisten.

So können verschiedene Arten und Mengen von Flächenisolierstoffen (z.B. Phasentrenner) innerhalb der Nut Barrieren darstellen, welche das Harz am optimalen Einfließen in die Wicklung hindern. Diese Flächenisolierstoffe (z.B. Nomex Papiere, Multilaminate aus PET-Folie und Aramidgewebe) sind flächige Ebenen, welche vom Harz nicht durchdrungen werden können, sondern das Harz zum Umfließen zwingen. Dieser Effekt verlangsamt ebenfalls das Eindringen in die Nut und verhindert im "worst-case" sogar somit die komplette Nutfüllung.

Mangelhaftes Einfließverhalten in die Nut lässt sich bisher durch Anpassung des Harzes reduzieren. Hierbei kann die Harzchemie derart angepasst werden, dass es sich um ein flüssigeres Material handelt, welches gegebenenfalls zusätzlich einen zeitverzögerten Gelierpunkt aufweist, so dass das Material zum einen schneller um Fließbarrieren, sowie entlang langer Wicklungsabschnitte bzw. Nuten fließen kann.

Eine Reduktion der Viskosität ist aber oftmals aus chemischer, technischer Sicht nicht mehr herstellbar, da diese im Rahmen der gesundheitlichen Vorschriften nicht mehr wünschenswert oder gar erlaubt sind. Niedrigere Viskositäten sind oftmals nur mit geringeren molekularen Kettenlängen und/oder Reaktivverdünnern zu realisieren.

Ein verzögerter Gelierpunkt eines Imprägnierharzes ist im Grunde genommen technisch möglich, jedoch aus wirtschaftlicher Sicht kontraproduktiv, da hierdurch die Taktzeiten im Herstellungsprozess eines Stators verlängert werden und/oder die Energiekosten für die Härtung des Harzes ansteigen.

Aus der US 2005/280321 A1, sowie der JP S61 247256 A sind Imprägnierverfahren für dynamoelektrische Maschinen bekannt.

Ausgehend davon liegt der Erfindung die Aufgabe zugrunde, die Imprägnierung eines Wicklungssystems in den Nuten eines Stators unter den oben genannten Parametern zu verbessern und einen Stator und eine dynamoelektrische Maschine mit zuverlässiger Imprägnierung bereitzustellen.

Die Lösung der gestellten Aufgabe gelingt durch ein Verfahren zur Herstellung eines Stators einer dynamoelektrischen Maschine nach Anspruch 1.

Die Lösung der gestellten Aufgabe gelingt auch durch eine Vorrichtung zur Herstellung eines Stators einer dynamoelektrischen Maschine nach Anspruch 6.

Bei dem erfindungsgemäßen Verfahren wird zunächst Harz auf die Wickelköpfe der dynamoelektrischen Maschine geträufelt, welches aufgrund der niedrigen Viskosität in den Nutbereich kapilliert. Im Anschluss folgt die Gelierphase, bei der die Viskosität zunimmt. In dieser Phase wird radial von innen - also aus Richtung Nutschlitz - Druck auf den Deckschieber Richtung Nutgrund aufgebracht, so dass sich der Nutinhalt verdichtet. Hohlräume werden eliminiert. Das eingebrachte Imprägnierharz verteilt sich gleichmäßig und füllt aufgrund des Verdichtens auch schwierig zu befüllende Bereiche innerhalb der Wicklung aus. Der radial Richtung Nutgrund eingebrachte Druck auf den Deckschieber wird solange ausgeübt bzw. aufrechterhalten, bis aufgrund der beginnenden Verfestigung des Harzes, ein Zurückfedern des Deckschiebers nach Druckentlastung vermieden wird. Der Deckschieber ist gegenüber der Ausgangsstellung in Richtung Nutgrund radial verschoben und wird dort positioniert und fixiert.

Möglich ist dies durch eine Art Lamellenpresse, welche radial auf die gesamte Nutlänge gleichzeitig bei allen Nuten des Stators Druck auf den Deckschieber aller Nuten ausübt. Dieser Druck wirkt zur Steigerung der Funktionalität pulsierend.

Eine weitere Möglichkeit der Verdichtung kann durch ein Rad bzw. Rolle erfolgen, das radial Richtung Nutgrund Druck ausübt und sich dabei axial auf der Nutlänge hin und her bewegt, erfindungsgemäß auch pulsierend. Dies geschieht vorzugsweise auch an allen Nuten eines Stators gleichzeitig, um vor dem Gelieren eine auseichende Kompaktierung der Wicklung in den jeweiligen Nuten zu erhalten.

Durch diese radiale Druckausübung während des Gelierens wird eine gleichmäßige Verteilung des Imprägnierharzes in der gesamten Nut und um die Wicklungsdrähte erreicht.

Dieser Prozess erfolgt solange, bis der Deckschieber in seiner unter Druck stehenden Position in der Nut verharrt.

Im Vergleich zu den gängigen Tauch-Imprägnierverfahren, wird bei diesem Verfahren der Nutinhalt verdichtet, insbesondere während der Gelierphase, was die Verdichtung besonders effektiv gestaltet. Der Deckschieber haftet mittels Imprägnierharz an den komprimierten Wicklungsdrähten und wird nicht wie üblich durch den Nutzahn fixiert.

Es sind erfindungsgemäß keine Lufteinschlüsse in dem Wicklungssystem in der Nut vorhanden. Damit wird die Durchschlagfestigkeit des Wicklungssystems des Stators erhöht, während die Vibrationsanfälligkeit gleichzeitig reduziert wird.

Durch die Kompaktierung der Wicklungsdrähte in der Nut des Stators liegen die Wicklungsdrähte im Bereich des Nutkastens besser an. Das schafft einen vergleichsweise guten wärmeleitenden Kontakt zu den Nutseitenwänden, womit die Wärmeabfuhr aus dem Wicklungssystem im Bereich der Nut zum Blech des Stators um bis zu 10-15% gesteigert wird.

Außerdem wird durch die Kompaktierung der Wicklungsdrähte eine Erhöhung der Vibrationsfestigkeit und/oder Durchschlagsfestigkeit einer Träufel-Imprägnier-Wicklung geschaffen.

Die Position des Deckschiebers ist im Vergleich zu herkömmlichen Verfahren somit in Richtung Nutgrund versetzt angeordnet.

Als Deckschieber wird dabei ein Flächenisolierstoff betrachtet, der insbesondere bei Träufelwicklungen als Streifen ausgebildet ist, im Bereich des Nutschlitzes einer Nut angeordnet ist und die Wicklung in den Nuten positioniert.

Beim Einziehen der Wicklung in das Blechpaket werden ebenfalls Flächenisolierstoffe mit in die Nuten eingebracht. Als Nutauskleidung dient hierbei ein sogenannter Nutkasten. Dabei handelt es sich um einen gefalzten Flächenisolierstoff, welcher mit seiner Querschnittsform idealerweise an die Kontur der Nut angepasst ist und an der Nutwandung anliegt. Die Nutauskleidung bildet dabei eine zusätzliche flächige elektrische Barriere zwischen dem Wicklungssystem, insbesondere der Kupferwicklung als Lackdraht ausgeführt, und dem einem magnetisch leitfähigen Körper, wie beispielsweise einem Blechpaket.

Nach dem Einzug der Wicklung wird der Nutschlitz mit einem erfindungsgemäßen Deckschieber verschlossen, welcher ebenfalls aus einem gefalzten Flächenisolierstoff besteht und zwei wichtige Funktionen aufweist. Zum einen realisiert man hiermit die notwendigen Luft- und Kriechstrecken, da sich Deckschieber und Nutkasten an den Rändern überlappen. Zum anderen verkeilt sich der Nutkasten mit dem Nutzahn und fixiert somit mechanisch die Wicklung in der Nut, so dass keine Einzeldrähte durch den Nutschlitz zurück in den Bereich des Luftspaltes oder des Rotors rutschen können.

Zusammen mit dem Nutkasten bildet der Deckschieber pro Nut einen Hauptkanal, welcher beim Imprägnierprozess mit Imprägnierharz beaufschlagt wird und die Wicklung, insbesondere Kupferwicklung beinhaltet.

In einer Ausführung kann der Deckschieber, auch doppellagig ausgeführt sein, um einen Nebenkanal für das Imprägnierharz zu schaffen. Dabei sind die beiden Lagen voneinander getrennt. Somit sind pro Nut mehrere effiziente Fließkanäle für einfließendes Imprägnierharz vorhanden.

Dabei sind die Fließröhren innerhalb der beiden lagen durch eine Riffelung einer Lage gebildet, und/oder es liegen bei einer Lage - auf der dem Wicklungssystem zugewandten Lage - Perforierungen vor, die eine vorgebbare Verteilung des Harzes innerhalb der axialen Länge der Nut gewährleisten oder zumindest unterstützen.

Hierbei wird durch eine Doppellage des Deckschieber eine Art Fließkanal erzeugt, welche jeweils am axialen Nutaustritt seine Öffnungen besitzt. Die innere Lage des Deckschiebers kann hierbei perforiert sein, d.h. mit Austrittslöchern versehen oder zweigeteilt sein, mit einem nicht bündigen Stoß in der Mitte des Bleches. Der Deckschieber an sich könnte einseitig in Längsrichtung bzw. Axialrichtung "geriffelt" sein, so dass eine möglichst definierte Fließröhre, insbesondere hin zur Nutmitte entsteht.

Das Einbringen des ein- oder doppellagigen Deckschiebers bei langen Blechpaketen ist typischerweise ein händischer Fertigungsprozess. Somit stellt eine Einbringung des doppellagigen Deckschiebers keinen nennenswerten zeitlichen Mehraufwand in der Fertigung dar und kann somit kosteneffizient realisiert werden.

Bei einer Tränkung wird das Wicklungssystem in den Nuten und/oder den Wickelköpfen mit Isolierharz gefüllt bzw. versehen und anschließend ausgehärtet. Die Tränkung dient dem Füllen von Hohlräumen im Dielektrikum und in den Strömungswegen der Wärme. Damit werden Glimmentladungen vermieden und der Wärmewiderstand reduziert. Außerdem dient die Tränkung der mechanischen Verfestigung. Durch den zusätzlichen radialen Druck durch Lamellenpresse oder Rollen wird der Wärmewiderstand reduziert und die Verfestigung verbessert.

Durch das erfindungsgemäße Verfahren werden die Tränkungszeiten des Stators reduziert und auch eine qualitativ hochwertige Tränkung des Stators und damit einer dynamoelektrischen Maschine geschaffen, die einen zuverlässigen Betrieb der dynamoelektrischen Maschine gewährleisten kann.

Ein derartiges Verfahren ist beispielsweise durch eine erfindungsgemäße Vorrichtung zur Herstellung eines Stators einer dynamoelektrischen Maschine umsetzbar. Dabei wird in einer Haltevorrichtung ein magnetisch leitfähiger Körper, insbesondere ein Blechpaket positioniert, das ein in im Wesentlichen axial verlaufenden Nuten angeordneten Wicklungssystem aufweist. Dieses Wicklungssystem des Stators bildet an den Stirnseiten des magnetisch leitfähigen Körpers Wickelköpfe aus, auf die während einer rotierende und/oder taumelnd rollierende Bewegung der Haltevorrichtung und damit des magnetisch leitfähigen Körpers Imprägnierharz aufgebracht, insbesondere geträufelt wird. Während und/oder unmittelbar nach dem Träufelvorgang wird durch an die Haltevorrichtung angebrachte Hilfsvorrichtungen, die mitrotieren und/oder taumelnd mitrollieren Mittel aufweist, auf alle Nuten gleichzeitig ein radialer Druck aufgebracht, um während eines Imprägnierprozesses den jeweiligen Nuteninhalt, des magnetisch leitfähigen Körpers radial zu komprimieren. Dabei wird durch Druck auf den Deckschieber eine Verteilung des Imprägnierharzes und eine Komprimierung der Wicklung in der Nut erreicht.

Die Erfindung sowie weitere vorteilhafte Ausgestaltungen der Erfindung werden in den nachfolgenden prinzipiell dargestellten Zeichnungen näher erläutert. Darin zeigen:
- FIG 1: einen Längsschnitt einer prinzipiell dargestellten elektrischen Maschine,
- FIG2: einen Querschnitt einer Nut,
- FIG 3,4: einen Querschnitt einer Nut während des Komprimierens,
- FIG 5: axiales zur Mitte streichen unter radialem Druck.

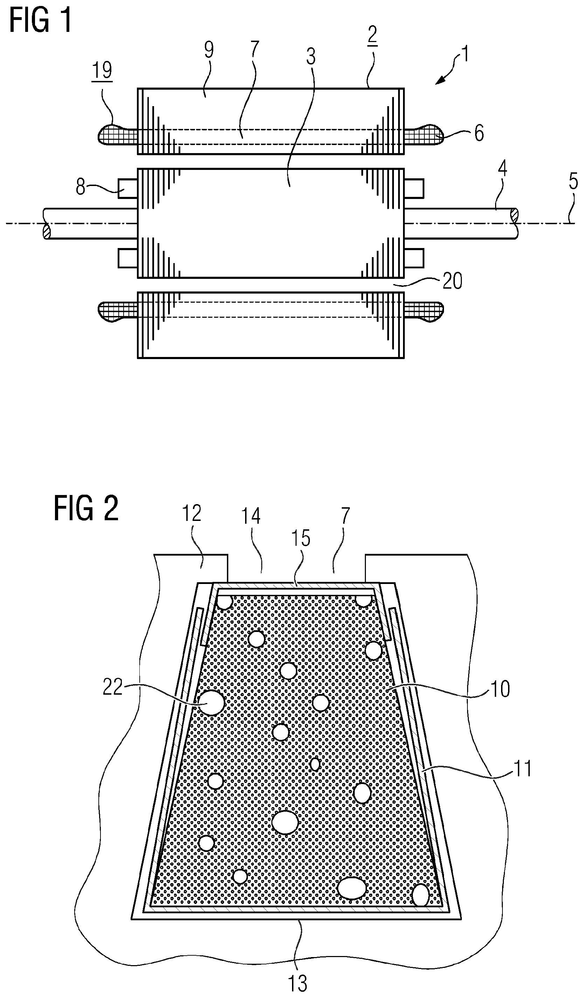

FIG 1 zeigt in einem Längsschnitt eine prinzipiell dargestellte dynamoelektrische Maschine 1, mit einem Stator 2, der axial verlaufende Nuten 7 aufweist, in denen ein Wicklungssystem 19 angeordnet ist. Über einen Luftspalt 20 hinweg tritt das bestromte Wicklungssystem 19 des Stators 2 in magnetische Wechselwirkung mit einem Rotor 3, der eine Drehung der Welle 4 um eine Achse 5 bewirkt. Die dynamoelektrische Maschine 1 ist von einem nicht näher dargestellten Gehäuse umgeben, das sich über Lager an der Welle 4 abstützt.

Beim Einziehen des Wicklungssystems 19 in die Nuten 7 eines Blechpakets 9 des Stators 2 oder zeitlich davor werden ebenfalls Flächenisolierstoffe mit in die Nuten 7 eingebracht. Als Nutauskleidung dient hierbei der sogenannte Nutkasten 11, wobei es sich dabei um einen gefalzten Flächenisolierstoff handelt, welcher sich mit seiner Querschnittsform idealerweise an die Kontur der Nut 7 angepasst und an der Nutseitenwand 21 und dem Nutgrund 13 anliegt. Verschiedene Arten und Mengen von Flächenisolierstoffen (z.B. Phasentrenner) stellen Barrieren dar, welche das Harz am optimalen Einfließen in das Wicklungssystem 5 hindern, was durch das im Weiteren beschriebene Verfahren vermieden wird.

Diese Flächenisolierstoffe (z.B. Nomex Papiere, Multilaminate aus PET-Folie und Aramidgewebe) sind flächige Ebenen, welche nicht durchdrungen werden können, sondern das Harz zum Umfließen zwingen. Um diese ggf. notwendige Umfließen zu forcieren wird das im Weiteren beschriebene Verfahren eingesetzt.

Die Nutauskleidung bzw. Nutisolierung 11 bildet dabei eine zusätzliche flächige elektrische Barriere zwischen dem Wicklungssystem 19, insbesondere einer Kupferwicklung als Lackdraht ausgeführt, und einem magnetisch leitfähigen Körper, beispielsweise einem Blechpaket 9 des Stators **2.**

In der Herstellung eines derartigen Niederspannungs-Elektromotors, als typische Industriemotoren oder E-Mobility-Motoren bis 1kV, ist die Imprägnierung des Wicklungssystems 19 mit flüssigem Reaktivharz und die anschließende Härtung desgleichen ein sehr zeit- und kostenaufwendiger Prozess im Vergleich zu den übrigen Fertigungsschritten des Wicklungssystems 19 wie Wickeln, Einziehen, Phasentrennen, etc.

Um einen definierten zeitlich kompakten Imprägnierprozess des Wicklungssystems 19 zu erhalten, wird u.a. das Träufelverfahren eingesetzt, wobei durch hochgenaue Dosieranlagen ein flüssiges Imprägnierharz auf den mittels einer Vorrichtung rollierenden Stator 2 aufgebracht wird.

Eine optionale Vorwärmung des Stators 2 erzeugt eine Viskositätsverringerung des Imprägnierharzes, womit der einsetzende Kapillareffekt des Imprägnierharzes in die Nut 7 und in die Hohlräume 22 zwischen den Wicklungsdrähten 10 einer Nut 7 begünstigt wird und sich die Nut 7 des Stators 2 somit sukzessive mit Harz füllt.

Bei der Applikation des Harzes, insbesondere auf einen rollierenden Stator 2, gibt es mehrere Parameter, welche beachtet werden müssen, um einen optimalen und vor allem ausreichenden Harzfluss in die Nuten 7 zu gewährleisten. Mit anderen Worten es muss gewährleistet sein, dass das Imprägniermedium auch bei axial längeren Blechpaketen 9 bis zum axialen und/oder radialen Mittelpunkt der Nut 7 fließt und dort erst geliert.

Dies ist insbesondere beim Einsatz von zwei-komponentigen Flüssigharzen wichtig, welche eine vergleichsweise kurze Gelierzeit besitzen, da hierdurch selbst bei niedrigen Temperaturen innerhalb von kurzer Zeit ein Viskositätsgrenzwert überschritten wird und somit die Fließfähigkeit der Substanz also des Imprägnierharzes deutlich verringert ist.

FIG 2 zeigt in einem Querschnitt eine Nut 7 der dynamoelektrischen Maschine 1, die ein Wicklungssystem 19 aufweist, das aus einer Vielzahl von Runddrähten 10 gebildet ist. In der Nut 7 können ebenso andere elektrische Leiter mit anderen Querschnitten eingesetzt sein. Die Nutseitenwand 21 und der Nutgrund 13 sind mit einer Nutisolierung 11 versehen. Es zeigen sich die Hohlräume 22, die u.a. den Füllgrad der Nut 7 reduzieren.

Ein Deckschieber 15, deckt die Nut 7 Richtung Luftspalt 20 ab. Der Deckschieber 15 ist in dieser Phase des Herstellprozesses des Stators 2 direkt am Nutschlitz 14 angeordnet und weist dort zu dem Luftspalt 20 der dynamoelektrischen Maschine 1. Mit der Nutisolierung 11 bildet sich eine Überlappung aus, derart, dass der Deckschieber 15 zumindest abschnittsweise innerhalb der Nutisolierung 11 angeordnet ist.

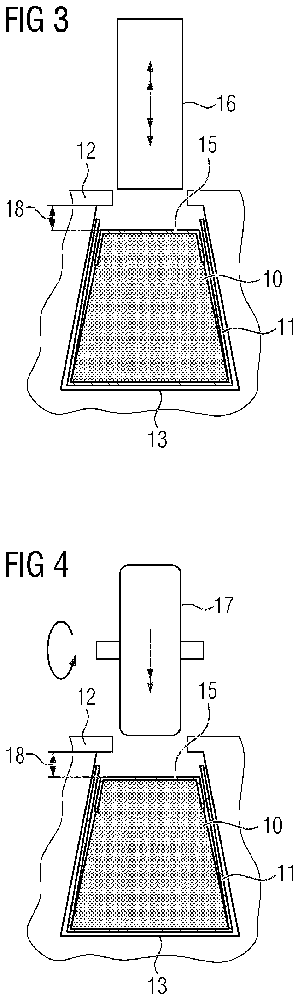

FIG 3 zeigt den prinzipiellen Vorgang des radialen Druckes einer Lamellenpresse 16 in einer Nut 7. Nachdem das Harz auf die Wickelköpfe 6 geträufelt wurde und aufgrund der niedrigen Viskosität in den Nutbereich kapilliert, folgt die Gelierphase, bei der die Viskosität zunimmt. In dieser Phase wird radial von innen, also von Richtung Nutschlitz 14, auf den Deckschieber 15 Druck Richtung Nutgrund 13 aufgebracht, so dass sich der Nutinhalt verdichtet. Hohlräume 22 werden eliminiert. Das eingebrachte Imprägnierharz verteilt sich gleichmäßig und füllt aufgrund des Verdichtens auch schwierig zu befüllende Bereiche innerhalb der Wicklungssystems 19 im Nutbereich aus. Der radial eingebrachte Druck Richtung Nutgrund 13 auf den Deckschieber 15 wird solange aufrechterhalten, bis aufgrund der beginnenden Verfestigung des Harzes, ein Zurückfedern nach Druckentlastung vermieden wird. Der Deckschieber 15 ist gegenüber der Ausgangsstellung in Richtung Nutgrund 13 radial verschoben und wird dort positioniert und fixiert.

Möglich ist dies durch eine Art Lamellenpresse 16, welche radial auf die gesamte axiale Länge der Nut 7 gleichzeitig Druck auf den Deckschieber aller Nuten des Stators 2 ausübt. Dieser Druck wirkt zur Steigerung der Funktionalität pulsierend von der Lamellenpresse 16 auf den Deckschieber.

Eine weitere Möglichkeit der Verdichtung kann durch ein Rad bzw. Rolle nach FIG 4 erfolgen, die radial Druck auf den Deckschieber 15 Richtung Nutgrund 13 ausübt und sich dabei axial auf der Nutlänge hin und her bewegt, erfindungsgemäß auch radial pulsierend. Dies geschieht vorzugsweise auch an allen Nuten 7 eines Stators 2 gleichzeitig, um vor dem Gelieren eine auseichende Kompaktierung der Wicklung in den jeweiligen Nuten 7 geschaffen zu haben.

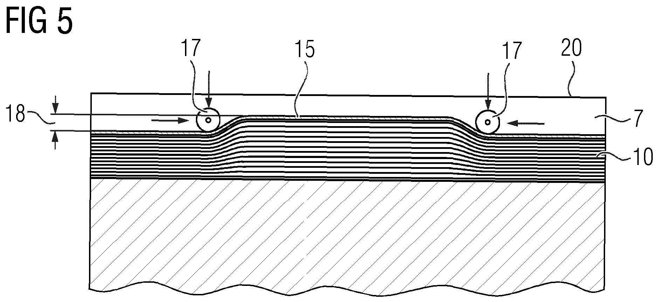

FIG 5 zeigt eine weitere Ausführung mit zwei Rollen pro Nut die während des Gelierens das Harz zur Mitte streichen, während sie einen radialen Druck auf den Deckschieber 15 und damit die Wickeldrähte 10 ausüben.

Durch alle aufgezeigten Komprierungmaßnahmen wird eine gleichmäßige Verteilung des Imprägnierharzes in der gesamten Nut 7 und um die Wicklungsdrähte 10 erreicht.

Dieser Prozess des radialen Verdichtens erfolgt solange, bis der Deckschieber 15 in seiner unter Druck stehenden Position in der jeweiligen Nut 7 verharrt.

Im Vergleich zu den gängigen Tauch-Imprägnierverfahren, wird bei diesem Verfahren der Nutinhalt, also die Wickeldrähte 10 des Wicklungssystems 19 verdichtet, insbesondere während der Gelierphase, was die Verdichtung besonders effektiv gestaltet. Der Deckschieber 15 haftet mittels Imprägnierharz an den komprimierten Wicklungsdrähten 10 und wird nicht wie üblich durch den Nutzahn 12 fixiert.

Es sind erfindungsgemäß keine Lufteinschlüsse in dem Wicklungssystem 19 in der Nut 7 vorhanden. Damit wird die Durchschlagfestigkeit des Wicklungssystems 19 erhöht, während die Vibrationsanfälligkeit des Wicklungssystems 19 reduziert wird.

Durch die Kompaktierung der Wicklungsdrähte 10 in der Nut 7 liegen die Wicklungsdrähte 10 auch im Bereich des Nutkastens besser an. Das schaffte einen vergleichsweise guten Kontakt zu den Nutseitenwänden 21, womit die Wärmeabfuhr aus dem Wicklungssystem 19 im Bereich der Nut 7 zum Blech des Stators 2 um 10-15% gesteigert wird.

Damit wird vor auch allem im mittleren Bereich der Nut 7 eine ausreichende Harzmenge im Wicklungssystem 19 erhalten. Dies ist insbesondere bei der Nutzung eines zwei-komponentigen Flüssigharzes vorteilhaft, welche eine relativ kurze Gelierzeit aufweist. Selbst bei niedrigen Temperaturen wird der Viskositätsgrenzwert erfindungsgemäß nicht so schnell überschritten und somit wird die Fließreichweite vergrößert.

Die Position des Deckschiebers 15 in der Nut 7 ist im Vergleich zu herkömmlichen Verfahren Richtung Nutgrund 13 versetzt, was u.a. einer axialen Luftkühlung im Bereich des Luftspaltes 20 zugutekommt.

Vorteilhaft ist es, wenn dieses Verfahrens der Imprägnierung eines Stators 2 mittels einer Vorrichtung erfolgt, an die die jeweils notwendigen Hilfsvorrichtung modular anbringbar sind, und über eine Steuerung dementsprechend einstellbar sind.

Eine mit einem derartigen Stator 2 versehene dynamoelektrische Maschine 1 weist eine zuverlässige Imprägnierung auf, was einen zuverlässigen Betrieb der Maschine 1 gewährleistet, um auch bei anspruchsvollen Antriebsaufgaben eingesetzt zu werden. Dies bedeutet u.a. reduzierte Glimmentladung und verbesserte Wärmeabfuhr aus dem Wicklungssystem des Stators.

Somit werden derartige dynamoelektrischen Maschinen 1 im industriellen Umfeld u.a. als Antrieb von Förderbändern, Verdichtern, Kompressoren, Pumpen als auch als bei mobilen Antrieben verwendet.

## Patentansprüche

1. Verfahren zur Herstellung eines Stators (2) einer dynamoelektrischen Maschine (1):
- Bereitstellen eines magnetisch leitfähigen Körpers eines Stators (2) einer dynamoelektrischen Maschine (1) mit im Wesentlichen axial verlaufenden Nuten (7), insbesondere einem hohlzylindrischen Blechpaket (9), wobei die Nuten (7) einen Nutschlitz (14), Nutseitenwände (21) und einen Nutgrund (13) aufweisen, wobei zwischen den Nuten (7) Nutzähne (12) ausgebildet sind,
- Einbringen eines Wicklungssystem (19) in die Nuten (7), wobei an den Stirnseiten des magnetisch leitfähigen Körpers Wickelköpfe (6) ausgebildet werden, wobei das Wicklungssystem (19) als Wicklungsdrähte (10) ausgebildete elektrische Leiter aufweist,
- Einsetzen je eines Deckschiebers (15) auf die Wicklung einer Nut (7) auf der zu einem Nutschlitz (14) gewandten Seite, als radialen Abschluss der Wicklungen zum Nutschlitz (14),
- Aufbringen, insbesondere Träufeln von Imprägnierharz auf die Wickelköpfe (6), zumindest auf einer Stirnseite des magnetisch leitfähigen Körpers, wobei das Imprägnierharz, aufgrund der vergleichsweise niedrigen Viskosität, im Wesentlichen axial in den Nutbereich zwischen die Wicklungsdrähte (10) kapilliert,
- Ausüben eines radialen Drucks auf die Deckschieber (15), der jeweiligen Nut (7), so dass der Nutinhalt - also die einzelnen Wicklungsdrähte (10) dieser Nut (7) - während der Gelierphase des Imprägnierharzes komprimiert und verdichtet werden, bis die Deckschieber (15) in ihrer unter Druck stehenden Position in der jeweiligen Nut (7) verharren und/oder das Imprägnierharz in der jeweiligen Nut (7) gleichmäßig verteilt ist, **dadurch gekennzeichnet, dass** der radiale Druck durch eine Lamellenpresse oder Rollen erfolgt und pulsierend auf den Deckschieber (15) einwirkt.

2. Verfahren zur Herstellung eines Stators (2) einer dynamoelektrischen Maschine (1) nach Anspruch 1, **dadurch gekennzeichnet , dass** der radiale Druck mittels einer Lamellenpresse (16) erfolgt, die auf die Deckschieber (15) der Nuten (7) gleichzeitig, während oder nach dem Träufelvorgang des Imprägnierharzes auf den Wickelkopf (6) des Stators (2) drückt.

3. Verfahren zur Herstellung eines Stators (2) einer dynamoelektrischen Maschine (1) nach Anspruch 1, **dadurch gekennzeichnet , dass** der radiale Druck mittels einer axial in den jeweiligen Nutschlitzen (14) hin- und herlaufenden Rolle erfolgt, die jeweils auf die Deckschieber (15) der Nuten (7) gleichzeitig, während oder nach dem Träufelvorgang des Imprägnierharzes auf den Wickelkopf (6) des Stators (2), radialen Druck ausüben.

4. Verfahren zur Herstellung eines Stators (2) einer dynamoelektrischen Maschine (1) nach Anspruch 1, **dadurch gekennzeichnet , dass** der radiale Druck mittels zweier von der Stirnseite ausgehenden Rollen erfolgt, die unter Druck zu Mitte der jeweiligen Nut (7) streichen.

5. Verfahren zur Herstellung eines Stators (2) einer dynamoelektrischen Maschine (1) nach einem der vorhergehenden Ansprüche, **dadurch gekennzeichnet , dass** das Imprägnierharz auf den oder die Wickelköpfe (6) eines rollierenden, insbesondere schräg rolliernden oder taumelnden Stators (2) aufgebracht wird.

6. Vorrichtung zur Herstellung eines Stators (2) einer dynamoelektrischen Maschine (1) mittels des Verfahrens nach Anspruch 1, mit zumindest einer Haltevorrichtung eines magnetisch leitfähigen Körpers des Stators (2), mit einem in Nuten (7) mit einem in Nuten des magnetisch leitfähigen Körpers angeordneten Wicklungssystem (19), wobei die Haltevorrichtung eine rotierende und/oder taumelnd rollierende Bewegung des magnetisch leitfähigen Körpers gestattet, wobei während dieser Bewegung Imprägnierharz auf einen Wickelkopf (6) des Wicklungssystems (19) des magnetisch leitfähigen Körpers aufbringbar ist, wobei die Vorrichtung eine Hilfsvorrichtung umfasst, die an die Haltevorrichtungen anbringbar ist, die zumindest eine mitrotierende und/oder taumelnd mitrolierende Lamellenpresse oder Rolle aufweist, um während eines Imprägnierprozesses einen jeweiligen Nuteninhalt des magnetisch leitfähigen Körpers radial pulsierend zu komprimieren.

## Claims

1. Method for producing a stator (2) of a dynamoelectric machine (1):
- providing a magnetically conductive body of a stator (2) of a dynamoelectric machine (1) with substantially axially running slots (7), in particular a hollow-cylindrical laminated core (9), wherein the slots (7) have a slot opening (14), slot side walls (21) and a slot base (13), wherein slot teeth (12) are formed between the slots (7),
- inserting a winding system (19) into the slots (7), wherein winding overhangs (6) are formed on the end faces of the magnetically conductive body, wherein the winding system (19) has electrical conductors formed as winding wires (10),
- inserting a cover slide (15) onto each winding of a slot (7) on the side facing toward a slot opening (14), as a radial end of the windings toward the slot opening (14),
- applying, in particular trickling, impregnating resin onto the winding overhangs (6), at least on one end face of the magnetically conductive body, wherein the impregnating resin, due to the comparatively low viscosity, capillates substantially axially into the slot area between the winding wires (10),
- exerting a radial pressure on the cover slides (15) of the respective slot (7), such that the slot content - i.e. the individual winding wires (10) of this slot (7)
- is compressed and condensed during the gelling phase of the impregnating resin, until the cover slides (15) remain in their pressurized position in the respective slot (7) and/or the impregnating resin is distributed homogeneously in the respective slot (7), **characterized in that** the radial pressure is effected by a laminating press or rollers and acts on the cover slide (15) in a pulsating manner.

2. Method for producing a stator (2) of a dynamoelectric machine (1) according to Claim 1, **characterized in that** the radial pressure is effected by means of a laminating press (16), which presses on the cover slides (15) of the slots (7) simultaneously, during or after the trickling process of the impregnating resin onto the winding overhang (6) of the stator (2).

3. Method for producing a stator (2) of a dynamoelectric machine (1) according to Claim 1, **characterized in that** the radial pressure is effected by means of a roller which runs axially to and fro in the respective slot openings (14) and which in each case exert radial pressure on the cover slides (15) of the slots (7) simultaneously, during or after the trickling process of the impregnating resin onto the winding overhang (6) of the stator (2).

4. Method for producing a stator (2) of a dynamoelectric machine (1) according to Claim 1, **characterized in that** the radial pressure is effected by means of two rollers which run from the end face and which sweep under pressure to the centre of the respective slot (7).

5. Method for producing a stator (2) of a dynamoelectric machine (1) according to any one of the preceding claims, **characterized in that** the impregnating resin is applied to the winding overhang or overhangs (6) of a rolling, in particular obliquely rolling or wobbling, stator (2).

6. Device for producing a stator (2) of a dynamoelectric machine (1) by means of the method according to Claim 1, with at least one holding device of a magnetically conductive body of the stator (2), with a winding system (19) arranged in slots (7) with an in slots of the magnetically conductive body, wherein the holding device allows a rotating and/or tumblingly rolling movement of the magnetically conductive body, wherein, during this movement, impregnating resin can be applied to a winding overhang (6) of the winding system (19) of the magnetically conductive body, wherein the device comprises an auxiliary device, which can be attached to the holding devices and which has at least one laminating press or roller which rotates and/or tumblingly rotates therewith in order to compress a respective slot content of the magnetically conductive body in a radially pulsating manner during an impregnation process.

## Revendications

1. L'invention concerne un procédé de fabrication d'un stator (2) d'une machine dynamo-électrique (1) :
- fourniture d'un corps magnétiquement conducteur d'un stator (2) d'une machine dynamo-électrique (1) pourvu de rainures (7) qui s'étendent sensiblement axialement, en particulier un paquet de tôles cylindrique creux (9), les rainures (7) présentant une fente de rainure (14), des parois latérales de rainure (21) et un fond de rainure (13), des dents de rainure (12) étant formées entre les rainures (7),
- introduction d'un système d'enroulement (19) dans les rainures (7), des têtes d'enroulement (6) étant formées au niveau des côtés frontaux du corps magnétiquement conducteur, le système d'enroulement (19) possédant des conducteurs électriques réalisés sous la forme de fils d'enroulement (10),
- insertion respective d'un coulisseau de recouvrement (15) sur l'enroulement d'une rainure (7) sur le côté tourné vers une fente de rainure (14), en tant que terminaison radiale des enroulements par rapport à la fente de rainure (14),
- application, en particulier par versement goutte-à-goutte, de résine d'imprégnation sur les têtes d'enroulement (6), au moins sur un côté frontal du corps magnétiquement conducteur, la résine d'imprégnation, en raison de sa viscosité relativement faible, s'écoulant par capillarité sensiblement de manière axiale dans la zone de rainure entre les fils d'enroulement (10),
- exercice d'une pression radiale sur les glissières de recouvrement (15) de la rainure respective (7), de sorte que le contenu de la rainure - c'est-à-dire les fils d'enroulement (10) individuels de cette rainure (7)
- soit comprimé et compacté pendant la phase de gélification de la résine d'imprégnation, jusqu'à ce que les coulisseaux de recouvrement (15) restent immobiles dans leur position sous pression dans la rainure (7) respective et/ou que la résine d'imprégnation soit uniformément répartie dans la rainure (7) respective, **caractérisé en ce que** la pression radiale est exercée par une presse à lamelles ou des rouleaux et agit de manière pulsée sur le coulisseau de recouvrement (15).

2. Procédé de fabrication d'un stator (2) d'une machine dynamo-électrique (1) selon la revendication 1, **caractérisé en ce que** la pression radiale est exercée au moyen d'une presse à lamelles (16) qui appuie simultanément sur les coulisseaux de recouvrement (15) des rainures (7), pendant ou après l'opération de versement goutte-à-goutte de la résine d'imprégnation sur la tête d'enroulement (6) du stator (2).

3. Procédé de fabrication d'un stator (2) d'une machine dynamo-électrique (1) selon la revendication 1, **caractérisé en ce que** la pression radiale est exercée au moyen d'un rouleau qui se déplace axialement en va-et-vient dans les fentes de rainure (14) respectives, lequel exerce respectivement une pression radiale simultanément sur les coulisseaux de recouvrement (15) des rainures(7) pendant ou après l'opération de versement goutte-à-goutte de la résine d'imprégnation sur la tête d'enroulement (6) du stator (2).

4. Procédé de fabrication d'un stator (2) d'une machine dynamo-électrique (1) selon la revendication 1, **caractérisé en ce que** la pression radiale est exercée au moyen de deux rouleaux qui partent du côté frontal et qui effectuent un balayage sous pression vers le centre de la rainure (7) respective.

5. Procédé de fabrication d'un stator (2) d'une machine dynamo-électrique (1) selon l'une des revendications précédentes, **caractérisé en ce que** la résine d'imprégnation est appliquée sur la ou les têtes d'enroulement (6) d'un stator (2) roulant, notamment roulant obliquement ou en nutation.

6. Dispositif de fabrication d'un stator (2) d'une machine dynamo-électrique (1) au moyen du procédé selon la revendication 1, comprenant au moins un dispositif de maintien d'un corps magnétiquement conducteur du stator (2), comprenant un système d'enroulement (19) disposé dans des rainures (7) avec un dans des rainures du corps magnétiquement conducteur, le dispositif de maintien permettant un mouvement de roulement rotatif et/ou en nutation du corps magnétiquement conducteur, de la résine d'imprégnation pouvant être appliquée pendant ce mouvement sur une tête d'enroulement (6) du système d'enroulement (19) du corps magnétiquement conducteur, le dispositif comprenant un dispositif auxiliaire qui peut être fixé aux dispositifs de maintien, lequel possède au moins une presse à lamelles ou un rouleau qui accompagne le roulement rotatif et/ou en nutation afin de comprimer un contenu de rainure respectif du corps magnétiquement conducteur de manière pulsée radialement pendant un processus d'imprégnation.
